# EUROPEAN PATENT SPECIFICATION

(11) **EP 0 771 625 B1**
(45) Date of publication and mention of the grant of the patent: **10.10.2001**
(21) Application number: 96117598.1
(22) Date of filing: 04.11.1996
(51) Int. Cl.: B26D 7/26, B23Q 17/22, B26D 5/20, B26D 7/18

(54) **Rotary cutting device**
Rotationsschneidvorrichtung
Dispositif pour la coupe rotative

(30) Priority: 06.11.1995 SE 9503776
(43) Date of publication of application: 07.05.1997
(73) Proprietor: ROLF LARSSONS MEKANISK VERKSTAD AB, S-690 70 Palsboda (SE)
(72) Inventor: Strömberg, Sven Arne Roland, 694 35 Hallsberg (SE); Larsson, Rolf Arne, 690 70 Palsboda (SE)
(74) Representative: Wagner, Karl Heinz

(56) References cited:
- EP-A- 0 023 630
- EP-A- 0 364 864
- EP-A- 0 412 383
- EP-A- 0 595 773
- DE-A- 4 209 752
- DE-U- 9 210 819
- US-A- 1 653 048
- US-A- 5 020 228
- US-A- 5 127 292
- US-A- 5 140 880

## Description

The present invention relates to a cutting device for cutting running webs to sheets according to the preamble of claim 1, defined in view of the EP-A-0023630.

In order to cut off portions from the running web during cutting thereof to sheets, double knives are used, which consist of a unit having two knife blades fixedly located at a predetermined distance from each other.

Since the knife blades are included in the double-knife unit as fixed members, the distance therebetween can not be altered, which means that one with one and the same knife-bracket unit can cut off only portions having a certain width, but no portions having any other width. If portions having another width shall be cut off from the web, the knife-bracket unit must be replaced by another wherein the distance between the knife blades is different.

Certainly, one can change the speed of rotation of the rotatable knife bracket and thereby, the peripheral speed of the double knife for changing the width of the cut-off portions, but this is a circumstantial and time-consuming process.

Since the present double-knife units have fixedly mounted knife blades as defined, some problems arise. Thus, it is necessary to supply a large number of double-knife units, wherein the various units have different distances between the knife blades. Hereby, the costs increase, because every double-knife unit is an expensive precision instrument.

The object of the present invention has been to eliminate this problem by substantially simplifying the prior art double-knife units and make them usable for cutting off portions with different width from the web. This is arrived at according to the invention by providing the initially defined cutting device with the characterizing features of subsequent claim 1.

Since the initially derined cutting device is provided with said characterizing features, it is possible to alter the distance between the knife blades simply by replace the distance means between them by a distance means having another width. Since the cost for a distance means is substantially lower than for a double-knife unit with two fixed knife blades, the costs can be substantially reduced, particularly since it becomes possible to use standard type knife blades also for the double cutting in question.

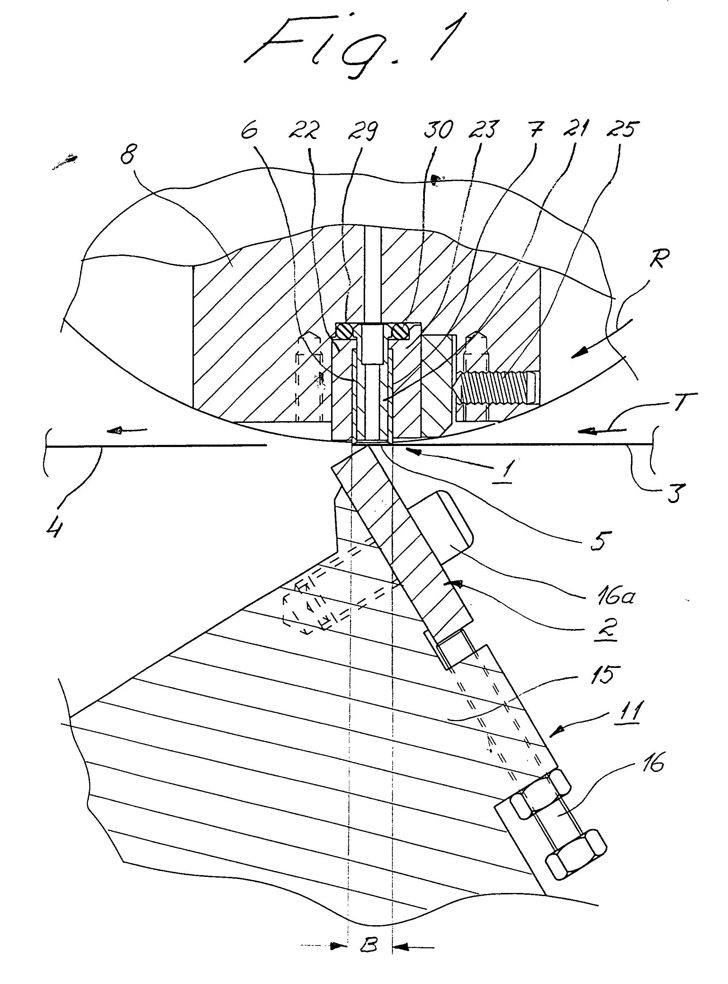

The invention will be further described below with reference to the accompanying drawings, in which
fig. 1 is a section through knives forming part of the cutting device according to the invention;

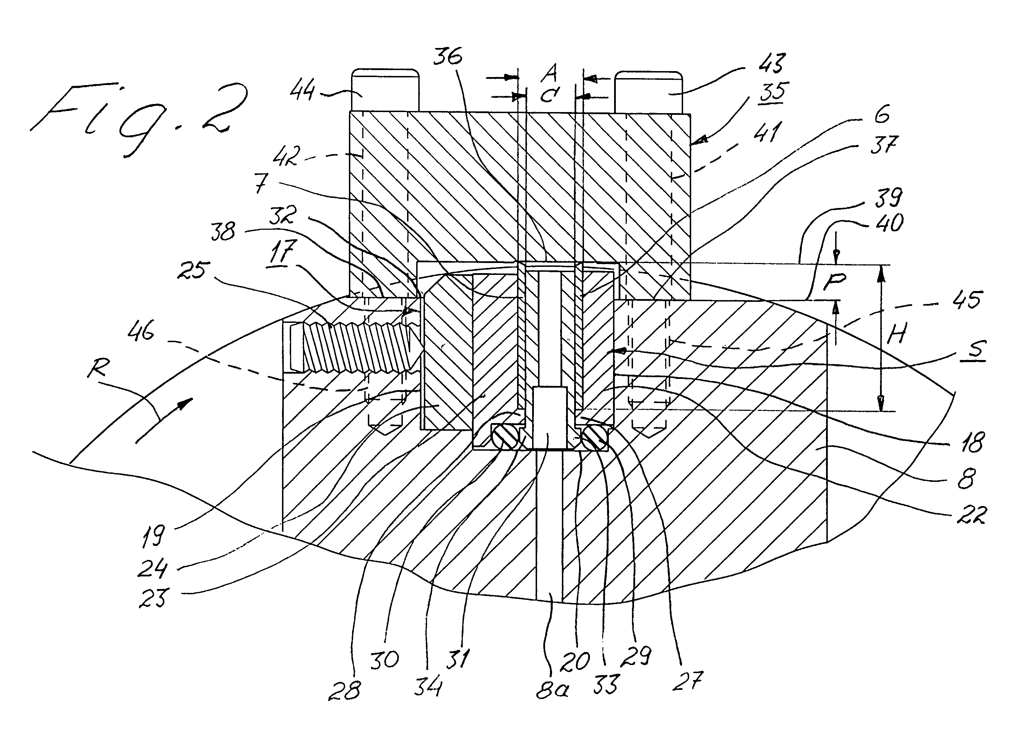

fig. 2 is a section through one of the knives of fig. 1 and a setting device adapted therefor;
fig. 3 is a front view of a rotatable knife bracket forming part of the cutting device according to the invention; and
fig. 4 is a partially sectional view through the rotatable knife bracket of fig. 3.

The cutting device illustrated in the drawings comprises two knives 1 and 2 for cutting a running web 3 to sheets 4 and for cutting off portions 5 from said web 3. Thus, one knife 1 is a double knife with two knife blades 6, 7 and mounted on a rotatable knife bracket 8 so that it during rotation of said knife bracket 8 in the direction of rotation R in cooperation with the other knife 2 at every cutting moment first cuts off a sheet 4 from the running web 3 and then cuts off a strip like portion 5 from such an end portion of said web 3 which, in the tranport direction T thereof, follows directly after the cut-off sheet 4. The width B of the strip like portion 5 corresponds to the distance A between the outer sides of the knife blades 6, 7 of the double knife.

The rotatable knife bracket 8 is mounted between two carrier arms 9, 10 in a machine unit 11 and is operated to rotate about a shaft 12 in a drive unit (not shown), the drive movement of which is transferred to the knife bracket 8 through two driving wheels 13 and 14, preferably in the form of gear wheels in driving engagement with each other.

The other knife 2 is located on a knife retainer member 15 which is fixedly secured in the machine unit 11. The knife 2 can be set in different positions relative to the knife retainer member 15 by means of set screws 16 and it can be locked thereon by means of locking screws 16a.

The rotatable knife bracket 8 has a groove 17 which is limited by two opposed side walls 18, 19 and a bottom 20. A set S of separate members are located beside each other in said groove 17 and three of said members consist of two separate knife blades 6 and 7 and a separate distance means 21 located therebetween, said distance means 21 having a width C determining the distance between the knife blades 6, 7 and thus, the width B of the strip like member 5 to be cut off the running web 3.

By replacing a distance means 21 with a width C by another distance means 21 with another width C, it is possible to cut off strip like portions 5 having another width B. This means that one can cut off portions 5 with many different widths B simply by storing a large number of simple and cheap distance means 21 with various widths C and then, when required, exchange said distance means 21 with each other for obtaining the desired width B on the strip like portion 5.

The set S of separate members located beside each other in the groove 17 also includes two knife-blade brackets 22, 23 and may include a protective element 24, whereby the knife-blade bracket 22 is situated between one knife blade 6 and one side wall 18 of the groove 17 and the other knife-blade bracket 23 between the knife blade 7 and an opposite side wall 19 of said groove 17. Said protective element 24 is provided between said other knife-blade bracket 23 and said latter side wall 19. The protective element 24 consists of harder material than the knife-blade bracket 23 and is adapted to prevent one or more retaining means 25 from damaging said bracket 23.

The retaining means 25 preferably consists of a screw for engagement in a threaded hole 26 in the knife retainer member 15 until said member 15 retains the members forming part of said set S, i.e. the knife blade brackets 22, 23, the knife blades 6, 7, the distance means 21 and the protective element 24, against the side wall 18 of the groove 17.

In a way bearing some resemblance to that suggested by DE-A-42 09 752, Fig.7, each knife blade bracket 22 and 23 respectively, includes a laterally protruding tongue 27 and 28 respectively, which is directed inwards towards the distance means 21 and somewhat shorter than the thickness of the knife blade 6 and 7 respectively. Each tongue 27 and 28 respectively, is adapted to permit that loads on the knife blades 6, 7 towards the bottom 20 of the groove 17 are transferred to the knife blade bracket 22 and 23 respectively, which in turn is mounted to transfer said loads to a support means 29 and 30 respectively, situated between the knife blade bracket 22 and 23 respectively, and the bottom 20 of the groove 17.

Each support means 29 and 30 respectively, has such resilient properties that it can be compressed when it is subjected to said loads. The support means 29, 30 can be elongated strips of such elastic, resilient material that they can be somewhat compressed. In order to prevent an undesired extensive compression of the support means 29, 30, the knife blade brackets 22, 23 may e.g. abut preventive means when they are brought to move towards the bottom 20 of the groove 17.

The distance means 21 preferably includes a passage 31 wherein a negative pressure is generated for retaining the strip like portions 5 cut off from the running web 3. The negative pressure in the passage 31 can retain said strip like portions 5 until the rotatable knife bracket 8 has rotated about half a revolution, after which said strip like portions 5 can be pushed away by means of a momentary blow of compressed air in the passage 31.

The distance means 21 preferably engages the bottom 20 of the groove 17 so that its passage 31 connects with a passage 8a in the knife bracket 8 which is connected to a vacuum/compressed air unit (not shown). The distance means 21 further has such a height that it extends upwards from said bottom 20 to at least an upper edge 32 of the groove 17. Since the distance means 21 has this height, essential parts of the knife blades 6, 7 may, in view of their heights H, engage said distance means 21. The distance means 21 may also comprise support portions 33, 34 for supporting the support means 29, 30 when said support means 29, 30 are loaded.

A setting device 35 is adapted for simultaneous setting of the two separate knife blades 6, 7 in predetermined cutting positions relative to the rotatable knife bracket 8. This is arrived at while the setting device 35 can press the knife blades 6, 7 simultaneously towards the bottom 20 of the groove 17 until they are located or set in said cutting positions.

The setting device 35 includes a pressure surface 36 and at least two support surfaces 37, 38 on opposite sides thereof. Hereby, the distance P between two planes 39, 40 in which the pressure surface 36 and the support surfaces 37, 38 respectively, are located, determines the cutting positions in which the knife blades 6, 7 can be set by the setting device 35. The setting device 35 further includes two holes 41, 42 for tension screws 43, 44 which are adapted to engage threaded holes 45, 46 in the rotatable knife bracket 8. Upon tightening of the tension screws 43, 44, the setting device 35 will approach the rotatable knife bracket 8, whereby the setting device 35, through its pressure surface 36, will press the knife blades 6, 7 towards the bottom 20 of the groove 17. When the support surfaces 37, 38 abut or engage the rotatable knife bracket 8, then the knife blades 6, 7 have reached their cutting positions. Then, the knife blades 6, 7 are fixed in these cutting positions by means of the retaining means 25 and first thereafter is the setting device 35 released from the rotatable knife bracket 8.

For being able to cut the running web 3 to sheets 4 with different lengths, the speed of rotation of the rotatable knife bracket 8 and thus, the peripheral speed of the knife blades 6, 7 can be changed. This can be done by replacing the drive wheel 14 by a drive wheel with another diameter. Additionally, a distance means 21 is chosen, having a width C which is adapted to the amended speed of rotation of the rotatable knife bracket 8, so that strip like portions 5 having e.g. the same width as before the speed variation can be cut off from the running web 3.

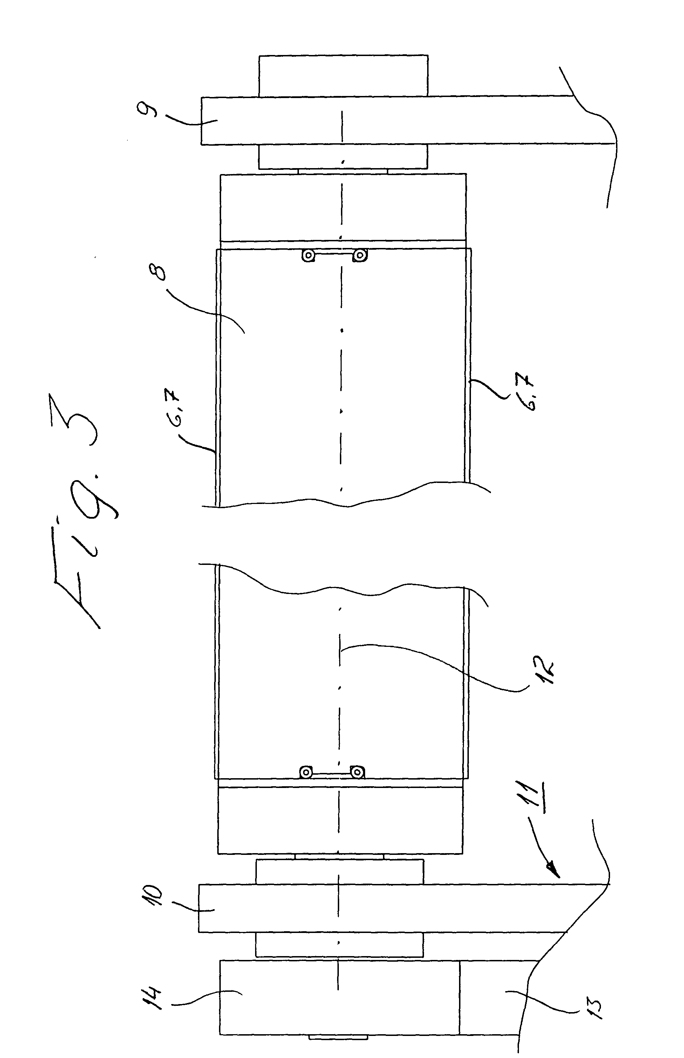

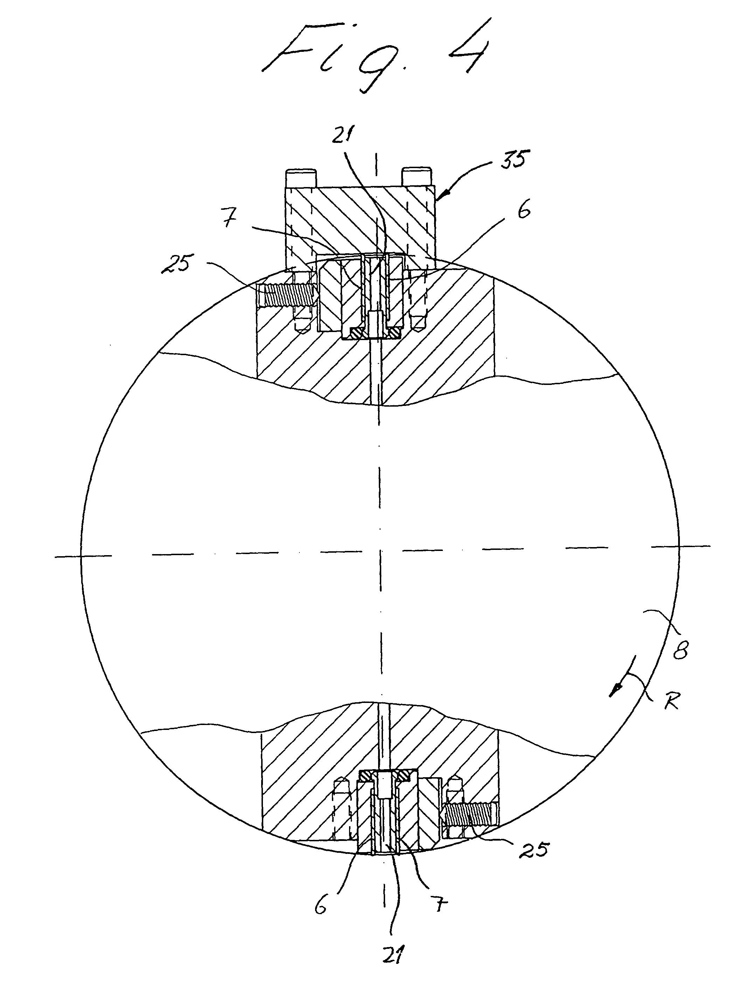

As is shown in fig. 3 and 4, the rotatable knife bracket 8 may be cylindrical and comprise two separate knife blades 6, 7 located substantially diametrically relative to each other.

The double knife 1 is preferably mounted so relative to the knife 2 that they define a shear-type cutting device.

The running web 3 may be of paper or another suitable material and the web may be printed or not; the print applied e.g. in a rotary printing press. Furthermore, the running web 3 may be provided online with the rotary printing press or with another printing device, or the running web 3 may alternatively be located offline with a so called offline machine.

The invention is not limited to the embodiment described above and illustrated in the drawings, but may vary within the scope of the following claims. Thus, it should be mentioned that more than one distance means 21 can be mounted between the knife blades 6, 7 and the strip like portions 5 cut off may have another form than strips.

## Claims

1. Cutting device for cutting running webs to sheets, whereby the cutting device includes two knives (1, 2) of which one knife is a double knife (1) located on a rotatable knife bracket (8) for cutting, in cooperation with the other knife (2), the running web (3) to sheets (4) and for cutting off portions (5) from said running web (3),
whereby the double knife (1) comprises two separate knife blades (6, 7) and at least one distance means (21) between said knife blades (6, 7), the width (C) of said distance means (21) determining the distance between the knife blades (6, 7) and thus, the width (B) of the portions (5) of the running web (3) to be cut from said web (3), and
whereby said distance means (21) can be replaced by at least one other distance means (21) having another width (C) for changing the distance between the knife blades (6, 7) and thereby being able to cut off portions (5) having another width (B) from the running web (3),
**characterized in**
**that** one knife blade bracket (22) is located between a knife blade (6) and a side wall (18) of a groove (17) of the rotatable knife bracket (8),
**that** the other knife blade bracket (23) is located between the other knife blade (7) and an opposite side wall (19) of the groove (17),
that the retaining means (25) is mounted to retain the knife blade brackets (22, 23), knife blades (6, 7) and distance means (21) against said former side wall (18) of the groove (17),
that each knife blade bracket (22 and 23) includes a laterally protruding tongue (27 and 28), whereby the respective knife blade (6, 7) engages said tongue (27 and 28 respectively) so that loads on the respective knife blade (6, 7) towards a bottom (20) of the groove (17) are transferred to the knife blade bracket (22 and 23 respectively), and
that each knife blade bracket (22 and 23) in turn transfers said loads to a support means (29 and 30 ) which is located between each knife blade bracket (22 and 23) and the bottom (20) of the groove (17) and which has resilient properties so that it can be compressed when it is subjected to said loads.

2. Cutting device according to claim 1, **characterized in that** each support means (29, 30) is an elongated strip of elastic, resilient material and that means are provided to prevent a too extensive compression of the respective support means (29, 30).

3. Cutting device according to claim 1 or 2, **characterized in that** the distance means (21) has a passage (31) in which a negative pressure is generated for retaining such portions (5) of the running web (3) which have been cut off from said web (3) by means of the separate knife blades (6, 7).

4. Cutting device according to any preceding claim, **characterized in that** the distance means (21) engages a bottom (20) of the groove (17) and has such a height that it from said bottom extends at least to an upper edge (32) of said groove (17).

5. Cutting device according to any preceding claim, **characterized in that** the distance means (21) has support portions (33, 34) for supporting the support means (29, 30) when said support means (29, 30) are loaded.

6. Cutting device according to any preceding claim, **characterized in that** the two separate knife blades (6, 7) are simultaneously settable in predetermined cutting positions by means of a setting device (35) which is adapted to simultaneously press the knife blades (6, 7) towards a bottom (20) of the groove (17) until they are set in said cutting positions.

7. Cutting device according to claim 6, **characterized in that** the setting device (35) includes at least one pressure surface (36) and at least two, on opposite sides of said pressure surface (36) located support surfaces (37, 38), whereby the distance (P) between two planes (39, 40) in which the pressure surface (36) and the support surfaces (37, 38) respectively, are provided, is intended for determining the cutting positions of the cutting blades (6, 7) relative to the rotatable knife bracket (8), and that the setting device (35) can be attached to the rotatable knife bracket (8) by means of tension screws (43, 44) which are provided, through tightening, to draw or pull the setting device (35) towards the rotatable knife bracket (8), whereby the setting device (35) through the pressure surface (36) presses the knife blades (6, 7) simultaneously towards the bottom (20) of the groove (17) until the support surfaces (37, 38) abut the rotatable knife bracket (8), such that the knife blades (6, 7) are brought to said cutting positions.

8. Cutting device according to claim 7, **characterized in that** the retaining means (25) is such to be brought to its retaining position for retaining the knife blades (6, 7) in their cutting positions before the setting device (35) is removed from the rotatable knife bracket (8).

9. Cutting device according to any preceding claim, **characterized in that** the speed of rotation of the rotatable knife bracket (8) and thereby, the peripheral speed of the knife blades, can be changed preferably by replacing a drive wheel (14) with one diameter for operation thereof by another drive wheel (14) with another diameter for cutting the running web (3) to sheets (4) of another length, whereby a distance means (21) located between the knife blades (6, 7) having a width (C) is replaced by a distance means (21) with another width (C) which is adapted to the amended speed of rotation of the rotatable knife bracket (8) for cutting off portions (5) having a predetermined width (B) from the running web (3).

10. Cutting device according to claim 1, **characterized in that** at least one retaining means (25) is provided to retain the two separate knife blades (6, 7) and the distance means (21) therebetween which are located beside each other in a groove (17) in the rotatable knife bracket (8) by pressing them against a side wall (18) of the groove (17).

11. Cutting device according to claim 10, **characterized in that** a protective element (24) is provided between the retaining means (25) and the other knife blade bracket (23).

## Patentansprüche

1. Schneidvorrichtung zum Schneiden von Bögen aus laufenden Bahnen,
wobei die Schneidvorrichtung zwei Messer (1, 2) umfaßt, von denen ein Messer als auf einem drehbaren Messerträger (8) angeordnetes Doppelmesser (1) zum Schneiden von Bögen (4) aus der laufenden Bahn (3) in Zusammenwirkung mit dem anderen Messer (2), und zum Ausschneiden von Abschnitten (5) aus der laufenden Bahn (3) ausgebildet ist,
wobei das Doppelmesser (1) zwei separate Messerklingen (6, 7) und zumindest ein Abstandsmittel (21) zwischen den Messerklingen (6, 7) umfaßt, wobei die Breite (C) des Abstandsmittels (21) den Abstand zwischen den Messerklingen (6, 7) und somit die Breite (B) der aus der laufenden Bahn (3) auszuschneidenden Abschnitte (5) der laufenden Bahn (3) bestimmt, und
wobei die Abstandsmittel (21) zur Änderung des Abstandes zwischen den Messerklingen (6, 7) durch mindestens ein weiteres, eine andere Breite (C) aufweisendes Abstandsmittel (21) ersetzt werden können und dadurch in der Lage sind, Abschnitte (5) mit einer anderen Breite (B) aus der laufenden Bahn (3) auszuschneiden,
**dadurch gekennzeichnet,**
**daß** ein Messerklingenträger (22) zwischen einer Messerklinge (6) und einer Seitenwand (18) einer Nut (17) des drehbaren Messerträgers (8) angeordnet ist,
**daß** der andere Messerklingenträger (23) zwischen der anderen Messerklinge (7) und einer gegenüberliegenden Seitenwand (19) der Nut (17) angeordnet ist,
**daß** das Haltemittel (25) zur Halterung der Messerklingenträger (22, 23), Messerklingen (6, 7) und des Abstandsmittels (21) gegen die erste Seitenwand (18) gehalten ist,
**daß** jeder der Messerklingenträger (22 und 23) eine seitwärts vorspringende Zunge (27 und entsprechend 28) umfaßt, wobei die jeweilige Messerklinge (6, 7) an der Zunge (27 und entsprechend 28) angreift, so daß zu einem Boden (20) der Nut (17) gerichtete Belastungen der jeweiligen Messerklinge (6,7) auf den Messerklingenträger (22 und entsprechend 23) übertragen werden, und
**daß** jeder Messerklingenträger (22 und 23) wiederum die Belastungen auf ein Lagermittel (29 und 30) überträgt, welches zwischen jedem der Messerklingenträger (22 und 23) und dem Boden (20) der Nut (17) angeordnet ist und welches elastische Eigenschaften aufweist, so daß es, wenn es der Belastung ausgesetzt ist, zusammengedrückt werden kann.

2. Schneidvorrichtung nach Anspruch 1, **dadurch gekennzeichnet, daß** jedes der Lagermittel (29, 30) aus einem länglichen Streifen eines elastischen, nachgiebigen Materials besteht, und daß Mittel zur Vermeidung einer übermäßigen Komprimierung der jeweiligen Lagermittel (29, 30) vorgesehen sind.

3. Schneidvorrichtung nach Anspruch 1 oder 2, **dadurch gekennzeichnet, daß** das Abstandsmittel (21) einen Durchgang (31) aufweist, in dem ein negativer Druck zur Halterung solcher Abschnitte (5) der laufenden Bahn (3), die durch die separaten Messerklingen (6, 7) aus der Bahn (3) ausgeschnitten wurden, erzeugt wird.

4. Schneidvorrichtung nach einem der vorhergehenden Ansprüche, **dadurch gekennzeichnet, daß** das Abstandsmittel (21) an dem Boden (20) der Nut (17) angreift und eine solche Höhe aufweist, daß es sich von dem Boden zumindest bis zu einer oberen Kante (32) der Nut (17) erstreckt.

5. Schneidvorrichtung nach einem der vorhergehenden Ansprüche, **dadurch gekennzeichnet, daß** das Abstandsmittel (21) einen Stützabschnitt (33, 34) zur Abstützung des Lagermittels (29, 30) bei Belastung des Lagermittels (29, 30) aufweist.

6. Schneidvorrichtung nach einem der vorhergehenden Ansprüche, **dadurch gekennzeichnet, daß** die beiden separaten Messerklingen (6, 7) gleichzeitig in vorbestimmte Schnittpositionen durch eine Einsetzvorrichtung (35), welche zum gleichzeitigen Eindrücken der Messerklingen (6, 7) in Richtung eines Bodens (20) der Nut (17) bis zum Erreichen der Schnittpositionen ausgelegt ist, einsetzbar sind.

7. Schneidvorrichtung nach Anspruch 6, **dadurch gekennzeichnet, daß** die Einsetzvorrichtung (35) zumindest eine Andruckfläche (36) und zumindest zwei, auf gegenüberliegenden Seiten der Andruckfläche (36) angeordnete Stützflächen (37, 38) umfaßt, wobei der Abstand (P) zwischen zwei Ebenen (39, 40), in denen jeweils die Andruckflächen (36) und die Stützflächen (37, 38) angeordnet sind, zur Bestimmung der Schneidpositionen der Schneidklingen (6, 7) relativ zu dem drehbaren Messerträger (8) dient, und daß die Einsetzvorrichtung (35) mittels Spannschrauben (43, 44), welche dazu ausgelegt sind, durch Anziehen die Einsetzvorrichtung (35) zu dem rotierbaren Messerträger (8) hinzuziehen, an dem rotierbaren Messerträger (8) festgelegt werden kann, wobei die Einsetzvorrichtung (35) die Messerklingen (6, 7) durch die Andruckfläche (36) gleichzeitig in Richtung des Bodens (20) der Nut (17) drückt, bis die Stützflächen (37, 38) gegen den drehbaren Messerträger (8) stoßen, so daß die Messerklingen (6, 7) in die Schnittpositionen gebracht werden.

8. Schneidvorrichtung nach Anspruch 7, **dadurch gekennzeichnet, daß** das Haltemittel (25) so ausgelegt ist, daß es in seine Halteposition zur Halterung der Messerklingen (6, 7) in ihren Schnittpositionen gebracht wird, bevor die Einsetzvorrichtung (35) von dem drehbaren Messerträger (8) entfernt wird.

9. Schneidvorrichtung nach einem der vorhergehenden Ansprüche, **dadurch gekennzeichnet, daß** die Drehgeschwindigkeit des drehbaren Messerträgers (8) und somit die Umfangsgeschwindigkeit der Messerklingen durch Ersetzen eines einen Durchmesser ausweisenden Antriebsrades (14) zum Antrieb des Messerträgers (8) durch ein anderes, einen anderen Durchmesser aufweisenden Antriebsrad (14) zum Ausschneiden von Bögen (4) anderer Länge aus der Bahn (3) geändert werden kann, wobei ein zwischen den Messerklingen (6, 7) angeordnetes Abstandsmittel (21) mit einer Breite (C) durch ein Abstandsmittel (21) mit einer anderen Breite (C) ersetzt ist, welche zum Ausschneiden von Abschnitten (5) einer vorbestimmten Breite (B) aus der laufenden Bahn (3) an die geänderte Drehgeschwindigkeit des drehbaren Messerträgers (8) angepaßt ist.

10. Schneidvorrichtung nach Anspruch 1, **dadurch gekennzeichnet, daß** zumindest ein Haltemittel (25) zum Halten der beiden nebeneinander in einer Nut (17) des Messerträgers (8) angeordneten separaten Messerklingen (6, 7) und des zwischen ihnen angeordneten Abstandsmittels (21) durch Andrücken an eine Seitenwand (18) der Nut (17) vorgesehen ist.

11. Schneidvorrichtung nach Anspruch 10, **dadurch gekennzeichnet, daß** ein Schutzelement (24) zwischen dem Haltemittel (25) und dem anderen Messerklingenträger (23) vorgesehen ist.

## Revendications

1. Dispositif de coupe pour couper en feuilles des bandes en défilement,
en conséquence de quoi le dispositif de coupe inclut deux couteaux (1, 2), dont un couteau est un couteau double (1) situé sur une attache de couteau rotative (8) pour couper, en coopération avec l'autre couteau (2), en feuilles (4) la bande en défilement (3) et pour découper des portions (5) à partir de ladite bande en défilement (3),
en conséquence de quoi le couteau double (1) comprend deux lames de couteau séparées (6, 7) et au moins un dispositif d'écartement (21) entre lesdites lames de couteau (6, 7), la largeur (C) dudit dispositif d'écartement (21) déterminant la distance entre les lames de couteau (6, 7) et, de cette façon, la largeur (B) des portions (5) de la bande en défilement (3) devant être découpées à partir de ladite bande (3), et
en conséquence de quoi ledit dispositif d'écartement (21) peut être remplacé par au moins un autre dispositif d'écartement (21) possédant une autre largeur (C) pour changer la distance entre les lames de couteau (6, 7) et ainsi être capable de découper des portions (5) possédant une autre largeur (B) à partir de la bande en défilement (3),
**caractérisé en ce que**
une attache de lame de couteau (22) est située entre une lame de couteau (6) et une paroi latérale (18) d'un évidement (17) de l'attache de couteau rotative (8), l'autre attache de lame de couteau (23) est située entre l'autre lame de couteau (7) et une paroi latérale opposée (19) de l'évidement (17),
un dispositif de maintien (25) est monté pour retenir les attaches de lames de couteau (22, 23), les lames de couteau (6, 7) et le dispositif d'écartement (21) contre ladite première paroi latérale (18) de l'évidement (17),
chaque attache de lame de couteau (22 et 23) inclut une languette débordant latéralement (27 et 28, respectivement), en conséquence de quoi la lame de couteau respective (6, 7) se met en prise avec ladite languette (27 et 28, respectivement), de sorte que des charges s'exerçant sur la lame de couteau respective (6, 7) vers le fond (20) de l'évidement (17) sont transférées vers l'attache de lame de couteau (22 et 23, respectivement), et
chaque attache de lame de couteau (22 et 23) transfère à son tour lesdites charges vers un dispositif support (29 et 30) qui est situé entre chaque attache de lame de couteau (22 et 23) et le fond (20) de l'évidement (17) et qui possède des propriétés résilientes, de sorte qu'il peut être comprimé lorsqu'il est soumis aux dites charges.

2. Dispositif de coupe suivant la revendication 1, **caractérisé en ce que** chaque dispositif support (29, 30) est une bande allongée d'un matériau élastique, résilient et **en ce que** le dispositif est prévu pour empêcher une compression trop élevée du dispositif support respectif (29, 30).

3. Dispositif de coupe suivant la revendication 1 ou 2, **caractérisé en ce que** le dispositif d'écartement (21) possède un passage (31) dans lequel une pression négative est générée pour maintenir de telles portions (5) de la bande en défilement (3) qui ont été découpées à partir de ladite bande (3) au moyen des lames de couteau séparées (6, 7).

4. Dispositif de coupe suivant l'une quelconque des revendications précédentes,
**caractérisé en ce que** le dispositif d'écartement (21) se met en prise avec le fond (20) de l'évidement (17) et possède une hauteur telle qu'il s'étend dudit fond vers au moins une bordure supérieure (32) de ledit évidement (17).

5. Dispositif de coupe suivant l'une quelconque des revendications précédentes,
**caractérisé en ce que** le dispositif d'écartement (21) possède des parties de soutien (33, 34) pour soutenir le dispositif de support (29, 30) lorsque ledit dispositif de support (29, 30) est chargé.

6. Dispositif de coupe suivant l'une quelconque des revendications précédentes,
**caractérisé en ce que** les deux lames de couteau séparées (6, 7) peuvent être réglées simultanément dans des positions de coupe prédéterminées au moyen d'un dispositif de réglage (35) qui est adapté pour presser simultanément les lames de couteau (6, 7) vers le fond (20) de l'évidement (17) jusqu'à ce qu'elles soient réglées dans lesdites positions de coupe.

7. Dispositif de coupe suivant la revendication 6,
**caractérisé en ce que** le dispositif de réglage (35) inclut au moins une surface de pression (36) et au moins deux surfaces support (37, 38) situées sur les côtés opposés de ladite surface de pression (36), en conséquence de quoi la distance (P) entre deux plans (39, 40) dans lesquels la surface de pression (36) et les surfaces support (37, 38), respectivement, sont prévues, est destinée à déterminer les positions de coupe des lames de coupe (6, 7) par rapport à l'attache de couteau rotative (8), et **en ce que** le dispositif de réglage (35) peut être fixé à l'attache de couteau rotative (8) au moyen de vis de tension (43, 44) qui sont prévues, en les serrant, pour tirer ou pousser le dispositif de réglage (35) vis-à-vis de l'attache de couteau rotative (8), en conséquence de quoi le dispositif de réglage (35) par l'intermédiaire de la surface de pression (36) presse les lames de couteau (6, 7) simultanément vers le fond (20) de l'évidement (17) jusqu'à ce que les surfaces support (37, 38) soient en butée contre l'attache de couteau rotative (8), de sorte que les lames de couteau (6, 7) sont amenées vers lesdites positions de coupe.

8. Dispositif de coupe suivant la revendication 7,
**caractérisé en ce que** le dispositif de maintien (25) est tel qu'il est amené vers sa position de maintien pour retenir les lames de couteau (6, 7) dans leurs positions de coupe avant que le dispositif de réglage (35) ne soit retiré de l'attache de couteau rotative (8).

9. Dispositif de coupe suivant l'une quelconque des revendications précédentes,
**caractérisé en ce que** la vitesse de rotation de l'attache de couteau rotative (8) et ainsi, la vitesse périphérique des lames de couteau, peut être changée de préférence en remplaçant une roue d'entraînement (14) avec un diamètre pour faire fonctionner celle-ci par une autre roue d'entraînement (14) avec un autre diamètre pour couper la bande en défilement (3) en feuilles (4) d'une autre longueur, en conséquence de quoi un dispositif d'écartement (21) situé entre les lames de couteau (6, 7) possédant une largeur (C) est remplacé par un dispositif d'écartement (21) avec une autre largeur (C) qui est adaptée à la vitesse de rotation modifiée de l'attache de couteau rotative (8) pour découper des portions (5) possédant une largeur prédéterminée (B) à partir de la bande en défilement (3).

10. Dispositif de coupe suivant la revendication 1,
**caractérisé en ce qu'**au moins un dispositif de maintien (25) est prévu pour retenir les deux lames de couteau séparées (6, 7) et le dispositif d'écartement (21) entre celles-ci qui sont situées à côté les uns des autres dans un évidement (17) dans l'attache de couteau rotative (8) en les pressant contre une paroi latérale (18) de l'évidement (17).

11. Dispositif de coupe suivant la revendication 10,
**caractérisé en ce qu'**un élément protecteur (24) est prévu entre le dispositif de maintien (25) et l'autre attache de lame de couteau (23).
